# EUROPÄISCHE PATENTSCHRIFT

(11) **EP 3 434 090 B1**
(45) Veröffentlichungstag und Bekanntmachung des Hinweises auf die Patenterteilung: **21.09.2022**
(21) Anmeldenummer: 18185198.1
(22) Anmeldetag: 24.07.2018
(51) Int. Cl.: A01B 79/00

(54) **SYSTEM ZUR ERFASSUNG VON DREIDIMENSIONALEN UMGEBUNGSDATEN, INSBESONDERE ZUR PFLANZENPFLEGE SOWIE SENSORMODUL**
SYSTEM FOR ACQUIRING THREE-DIMENSIONAL ENVIRONMENTAL DATA, IN PARTICULAR FOR PLANT CARE, AS WELL AS A SENSOR MODULE
SYSTÈME DE DÉTERMINATION DE DONNÉES D'ENVIRONNEMENT TRIDIMENSIONNELLES, EN PARTICULIER DESTINÉ À L'ENTRETIEN DES CULTURES ET MODULE CAPTEUR

(30) Priorität: 24.07.2017 DE 102017116661
(43) Veröffentlichungstag der Anmeldung: 30.01.2019
(73) Patentinhaber: Vorwerk & Co. Interholding GmbH, 42275 Wuppertal (DE)
(72) Erfinder: Hackert, Georg, 44869 Bochum (DE); Helmich, Martin, 47055 Duisburg (DE); Hillen, Lorenz, 42287 Wuppertal (DE); Holz, Christian, 44137 Dortmund (DE); Isenberg, Gerhard, 50668 Köln (DE); Koetz, Hendrik, 58300 Wetter (DE); Mosebach, Andrej, 44809 Bochum (DE); Ortmann, Roman, 47057 Duisburg (DE); Dulinski, Robin, 42283 Wuppertal (DE)
(74) Vertreter: Müller, Enno

(56) Entgegenhaltungen:
- EP-A1- 3 097 754
- WO-A1-2017/106874
- US-A1- 2006 213 167
- US-A1- 2010 268 679
- US-A1- 2012 029 732
- US-A1- 2013 325 242
- US-A1- 2017 082 442

## Beschreibung

### Gebiet der Technik

Die Erfindung betrifft ein System, bestehend aus einem mit Hilfe eines von einer Steuereinrichtung unter Verwendung von einer ersten Sensorik gewonnenen Sensordaten und ggf. einer in einem Speicherelement gespeicherten Kartografie gesteuerten Fahrwerks selbsttätig im Außenbereich verfahrbaren Fahrzeug, wobei mit der Sensorik körperliche Merkmale von Objekten der Umgebung erfassbar sind.

Ferner betrifft die Erfindung ein Verfahren zum Betrieb eines mit Hilfe eines von einer Steuereinrichtung unter Verwendung von einer ersten Sensorik gewonnenen Sensordaten und ggf. einer in einem Speicherelement gespeicherten Kartografie gesteuerten Fahrwerks selbsttätig im Außenbereich verfahrbaren Fahrzeuges, welches Werkzeuge aufweist.

### Stand der Technik

Derartige Arbeitsgeräte sind bspw. als selbstfahrende Rasenmäher im Stand der Technik bekannt. Aus der EP 2 423 893 B1 ist ein im Innenbereich verfahrbarer Kehrroboter bekannt, der Werkzeuge zum Reinigen aufweist.

Des Weiteren sind im Stand der Technik landwirtschaftliche Arbeitsmaschinen bekannt, die zur Feldarbeit ausgebildet sind. Die Dokumente US 2017/0029732 A1, US 2017/0082442 A1 und EP 3 097 754 A1 betreffen beispielsweise landwirtschaftliche Maschinen zur Ernte von Getreide auf Äckern oder zum Ausbringen von Saatgut. Dabei werden Merkmale der Pflanzen detektiert, um eine Fahrgeschwindigkeit der Arbeitsmaschine bei der Ernte zu bestimmen oder einen Bewegungspfad durch ein Feld mit beispielsweise Getreide zu bestimmen.

Weiteren Stand der Technik offenbart die US 2013/0325242 A1, dort eine landwirtschaftliche Maschine mit einer Sensorik, die die Notwendigkeit von beispielsweise einer Pflanzendüngung anhand einer Blattbeschaffenheit von Pflanzen ermittelt. Das Dokument WO 2017/106874 A1 betrifft ein landwirtschaftliches Modul zur Feldbearbeitung, wobei eine Modulhöhe an eine Pflanzenhöhe der zu bearbeitenden Pflanzen angepasst wird. Die US 2006/ 0213167 A1 offenbart eine Erntemaschine, welche eine Detektionseinrichtung zur Detektion von Größen zu erntender Früchte oder eine Detektionseinrichtung zur Detektion von Schädlingsbefall von Pflanzen aufweist.

### Zusammenfassung der Erfindung

Der Erfindung liegt die Aufgabe zugrunde, Maßnahmen zur automatisierten Pflanzenpflege anzugeben.

Die vorgenannte Aufgabe wird zunächst durch ein System gemäß Anspruch 1 gelöst.

Mit einem Sensormodul, das dem erfindungsgemäßen Fahrzeug zugeordnet werden kann, das aber auch frei im Gelände positionierbar ist, mit einer Sensorik, die berührungsfrei Sensordaten gewinnende Sensoren aufweist, können Umgebungsdaten erfasst werden. Die Sensoren sind so ausgebildet, um an einem Ort einer Pflanze, der bspw. in einer zweidimensionalen Kartografie verzeichnet ist, die räumliche Ausdehnung der Pflanze zu erfassen. Die von den Sensoren ermittelten Daten, bspw. Bilddaten, werden von einer bildverarbeitenden Recheneinrichtung verwendet, um ein Volumenmodell der Pflanze am Ort zu erfassen. Mit dem Verfahren wird der Ist-Zustand einer Pflanze oder werden Ist-Zustände mehrerer Pflanzen ermittelt. Mit den Sensordaten, die ein räumliches Abbild der Umgebung liefern, werden die zweidimensionalen Ortskoordinaten der Pflanzen um Höhen- und/oder Volumendaten ergänzt. Aus diesen Höhen- und Volumendaten kann die Recheneinrichtung aktuelle Wuchshöhen-Daten der Pflanzen ermitteln. Es ist ferner vorgesehen, dass die aktuellen Wuchshöhen-Daten mit älteren Wuchshöhendaten verglichen werden, die zu einem früheren Zeitpunkt mit demselben Verfahren bzw. demselben Sensormodul erfasst werden. Eine Wissensdatenbank, die Angaben enthält, zu welcher Jahreszeit bestimmte Pflegearbeiten, bzw. Schnittarbeiten durchgeführt werden können, kann verwendet werden, um Handlungsempfehlungen zur Pflege der Pflanze abzugeben. Hierzu wird im Wege eines Vergleiches der aktuellen Wachstumshöhendaten mit den älteren Wachstumshöhendaten eine Volumenvergrößerung der Pflanze ermittelt. Anhand der Wissensdatenbank wird ermittelt, ob die Volumenvergrößerung einen Schnitt erforderlich macht. In einer Weiterbildung der Erfindung werden diese Handlungsempfehlungen verwendet, um den Einsatz eines selbsttätig im Gelände verfahrbaren Pflanzenpflegeroboters zu steuern. Es ist ferner vorgesehen, dass die Wissensdatenbank von einer Benutzergruppe permanent weiter gepflegt ist und dezentral zur Verfügung steht, bspw. über das Internet erreichbar ist.

Das erfindungsgemäße System zur Pflanzenpflegeverwendet zur Erfassung der Höhen- und/oder Volumendaten zwei Sensormodule. Es ist insbesondere vorgesehen, dass eine erste und eine zweite Sensorik so ausgebildet sind, dass sie aus voneinander verschiedenen Perspektiven von demselben Objekt, also insbesondere derselben Pflanze, körperliche Merkmale erfassen. Bei den körperlichen Merkmalen handelt es sich bevorzugt um Angaben über die räumliche Erstreckung von Pflanzen. Aus diesen Angaben können die Höhen- und/oder Volumendaten ermittelt werden. Ein erfindungsgemäßes Sensormodul kann ein selbstfahrendes Landfahrzeug oder ein selbstfahrendes Luftfahrzeug sein. Das Fahrzeug ist insbesondere GPS-gesteuert. Das Luftfahrzeug kann selbsttätig an voneinander verschiedenen Positionen im Luftraum positioniert werden, um aus diesen Positionen Bilder des Objektes, insbesondere der Pflanze aufzunehmen. In einer Weiterbildung eines Sensormoduls wird vorgeschlagen, dass die Sensoren zumindest einen bildgebenden Sensor, einen Sensor zur Ermittlung einer Bodentemperatur und/oder einer Lufttemperatur, einen Sensor zur Ermittlung der Luftfeuchte und/oder der Bodenfeuchte, einen Sensor zur Ermittlung von UV-Strahlen und/oder einen Helligkeitssensor umfassen. Es ist ferner vorgesehen, dass das Sensormodul bzw. das das Sensormodul tragende Fahrzeug über eine Datenübertragungseinrichtung mit einer Basisstation oder einer externen Recheneinrichtung kommuniziert. Die externe Recheneinrichtung kann die Wissensdatenbank aufweisen. In der externen Rechendatenbank können auch die Mittel vorgesehen sein, mit denen von den von den Sensoren an verschiedenen Standorten aufgenommenen Abbildungen einer räumlichen Struktur ein dreidimensionales Modell der dreidimensionalen Struktur berechnet wird. Es ist ferner vorgesehen, dass das Fahrzeug wahlweise mit einem Sensormodul oder einem Arbeitsmodul bestückbar ist, wobei das Arbeitsmodul modulspezifische Werkzeuge zur Pflanzenpflege trägt. In einem Umgebungsdatenerfassungsmodus trägt das Fahrzeug das Sensormodul. In einem Arbeitsmodus trägt es das Arbeitsmodul. Werden mehrere Fahrzeuge bzw. ein Fahrzeug und ein ortsfestes Sensormodul verwendet, so kann das Arbeitsmodul mit den vom Sensormodul gewonnenen Sensordaten bewegungsgesteuert werden. Hierzu ist insbesondere vorgesehen, dass mit der ersten Sensorik und der zweiten Sensorik aus voneinander verschiedenen Perspektiven körperliche Merkmale desselben Objektes, insbesondere derselben zu pflegenden Pflanze erfasst werden.

### Kurze Beschreibung der Zeichnungen

Die Erfindung wird nachfolgend anhand beigefügter Zeichnungen erläutert. Es zeigen:

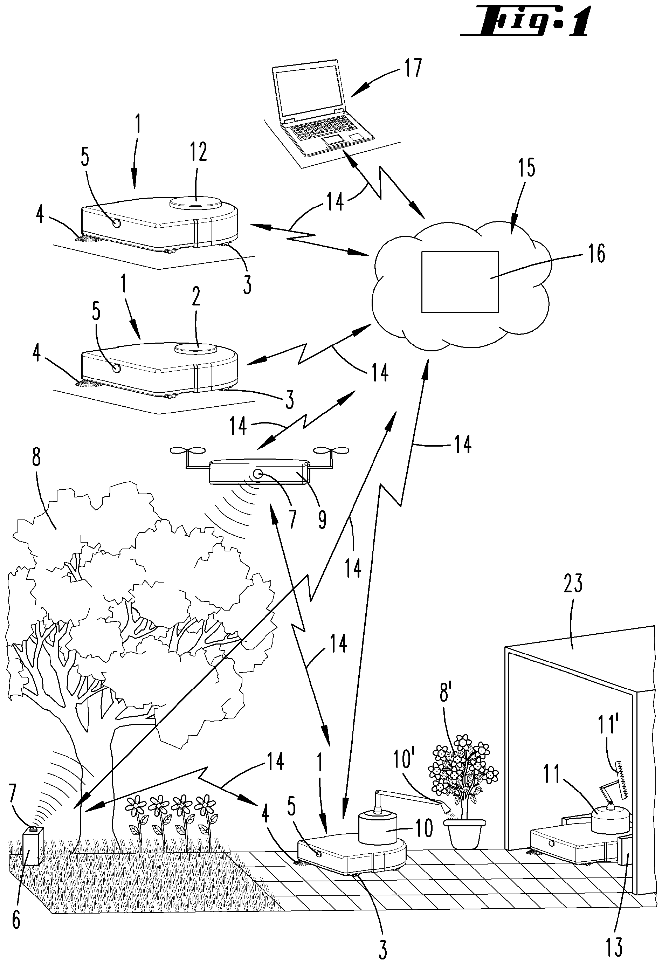

- Fig. 1: ein Pflanzen 8, 8' aufweisendes Gelände, ein Arbeitsgerät 1, zur Pflanzenpflege, ein Sensormodul 9 zur Erfassung von Umgebungsdaten und eine externe Recheneinrichtung 15 zur Kommunikation 14 mit einer Mehrzahl von Arbeitsgeräten 1 und/oder Datenkommunikationsgeräten 17,

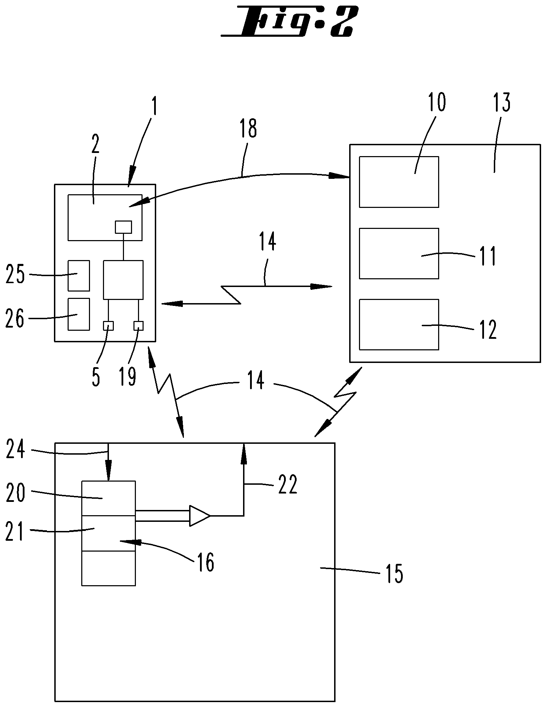

- Fig. 2: schematisch ein Arbeitsgerät 1, eine Basisstation 13 und die Kommunikationswege, mit denen mit einer externen Recheneinrichtung 15 kommuniziert wird

### Beschreibung der Ausführungsformen

Die Erfindung befasst sich mit Vorrichtungen und Verfahren sowie einem System zur Gartenpflege. Die wesentlichen Systembestandteile sind zumindest ein Arbeitsgerät 1, ein oder mehrere Arbeitsmodule 10, 11 und eine externe Recheneinrichtung 15, die über eine Datenübertragungseinrichtung 14, bei der es sich um ein Heimnetzwerk oder das Internet handeln kann, mit dem Arbeitsgerät 1 kommunizieren kann.

Das Arbeitsgerät 1 besitzt ein Gehäuse und innerhalb des Gehäuses ein Fahrwerk 3, das Räder, Kettenantriebe oder aber auch ein oder mehrere Luftschrauben aufweisen kann, mit denen das Arbeitsgerät 1 im Outdoorbereich, außerhalb von Gebäuden, in einem Garten, ggf. aber auch in der Luft, verfahren werden kann. Es besitzt eine Steuereinrichtung 12, bei der es sich um einen Mikrokontroller oder eine anderweitige programmgesteuerte Recheneinrichtung mit Speicherperipherie handeln kann.

Es sind Sensoren 5 vorgesehen, mit denen die Steuereinrichtung 12 strukturelle Daten der Umgebung bspw. die Form und die Größe von Gegenständen, wie Gebäuden, Pflanzen, aber auch Menschen und Tieren erfassen kann. Diese Daten dienen zunächst der Navigation des Arbeitsgerätes 1 im Gelände. In den Speicherelementen der Steuereinrichtung 12 kann darüber hinaus eine Kartografie des Geländes abgelegt sein, in der Rasenflächen, Nutz- oder Zierpflanzen-Beete, Bäume, Wege oder andere permanente Strukturdaten der Umgebung abgelegt sind, anhand der das Arbeitsgerät 1 selbsttätig im Gelände navigieren kann. Die Sensoren 5 umfassen darüber hinaus auch Sensoren zur Erfassung von sich im Laufe der Zeit ändernden Zustandsdaten der Umgebung, insbesondere der Pflanzen. So kann mit einer Kamera ein Abbild der Pflanzen gewonnen werden. Mit einem Feuchtesensor kann die Luftfeuchtigkeit oder die Bodenfeuchtigkeit ermittelt werden. Mit einem UV-Sensor kann die aktuelle UV-Einstrahlung bestimmt werden. Mit einem Thermometer kann die Bodentemperatur und/oder die Lufttemperatur gemessen werden. Mit einem Helligkeitssensor kann die aktuelle Helligkeit bestimmt werden. Es ist insbesondere vorgesehen, dass eine dreidimensionale Kartografie angefertigt wird, wobei diese Kartografie den Ort und die Höhe einzelner Pflanzen, einzelner Pflanzengruppen, Gebäuden oder anderweitiger Gegenstände enthält. Die dreidimensionale Kartografie enthält insbesondere auch die Art von Pflanzen und Zonen, die von einem Bodenfahrzeug nicht befahren werden dürfen. Ferner kann die Kartografie Lagerplätze für Arbeitsgeräte, wie Fahrzeuge und Arbeitsmodule oder Sensormodule, beinhalten. Die Erstellung der dreidimensionalen Kartografie kann auf der Basis einer zweidimensionalen Kartografie erfolgen, wobei die zweidimensionale Kartografie von einem Anwender mit Messmitteln oder mit Abbildungen erzeugt worden ist. Mittels der Sensoren 5 kann die Umgebung erfasst werden, um die 2D-Kartografie zu ergänzen.

Es ist eine Sende-/Empfangseinrichtung 19 vorgesehen, mit der eine drahtlose Kommunikation insbesondere über die Datenübertragungseinrichtung 14 möglich ist. Die Sende-/Empfangseinrichtung 19 kann unmittelbar mit einer Basisstation 13 kommunizieren, die ortsfest im Gelände angeordnet ist und deren Lage in der Kartografie des Arbeitsgerätes 1 verzeichnet ist. Die Datenübertragungseinrichtung 14 kann aber auch so eingerichtet sein, dass das Arbeitsgerät 1 unmittelbar mit einem Heimnetzwerk oder dem Internet kommunizieren kann.

Das Arbeitsgerät 1 enthält darüber hinaus einen Akkumulator 25, der bei einem Aufenthalt des Arbeitsgerätes 1 an der Basisstation 13 geladen werden kann und der ansonsten das Arbeitsgerät 1 mit elektrischer Energie versorgt.

Das Arbeitsgerät 1 besitzt eine Vorrichtung zur Aufnahme von Arbeitsmodulen 10, 11, die modulspezifische Werkzeuge 10', 11' tragen. Diese Vorrichtung wird im folgenden Modulträger 2 genannt und ist so ausgebildet, dass das Arbeitsgerät 1 selbsttätig ein Arbeitsmodul 10 gegen ein anderes Arbeitsmodul 11 austauschen kann. Dies erfolgt bevorzugt an der Basisstation 13 oder im Bereich einer Bevorratungsvorrichtung, bspw. eines Schuppens 23, in dem wettergeschützt die Arbeitsmodule 10, 11 bevorratet sind. Dort können in den Zeichnungen nicht dargestellte Mittel vorgesehen sein, bspw. Greifer o. dgl., mit denen die Arbeitsmodule 10, 11 auf dem Modulträger 2 fixiert werden können. Der Modulträger 2 kann eine Modulschnittstelle 18 aufweisen, mit der eine Signalverbindung und eine Stromverbindung zum Arbeitsmodul 10 hergestellt werden kann.

Der Modulträger 2 besitzt eine nicht dargestellte mechanische Schnittstelle und eine nicht dargestellte elektrische Schnittstelle. Die Arbeitsmodule 10, 11 oder ggf. vorhandene Sensormodule besitzen ebenfalls eine mechanische Schnittstelle und ein elektrische Schnittstelle. Die beiden mechanischen Schnittstellen wirken derart miteinander zusammen, dass sie das Arbeitsmodul 10 oder das Sensormodul an den Modulträger 2 mechanisch fesseln. Es kann sich dabei um Haken handeln, um Schraubverbindungen oder um anderweitige Rastverbindungen, die von einer Fesselungsstellung in eine Lösestellung bringbar sind. Mit der elektrischen Schnittstelle kann elektrische Energie vom Arbeitsgerät 1 auf das Arbeitsmodul 10, 11 übertragen werden. Es ist aber auch möglich, elektrische Energie von dem Arbeitsmodul 10, 11 auf das Arbeitsgerät 1 zu übertragen. Darüber hinaus ist vorgesehen, dass über die elektrische Schnittstelle ein Datenaustausch zwischen dem Arbeitsgerät 1 und dem Arbeitsmodul 10, 11 stattfindet. Die elektrische Schnittstelle kann eine Steckverbindung sein. Hierzu greifen Stecker und Gegenstecker ineinander, um elektrisch miteinander in Kontakt zu treten.

In den Zeichnungen sind lediglich beispielhaft ein Arbeitsmodul 10 in Form eines Bewässerungsmoduls dargestellt, welches ein Bewässerungswerkzeug 10' aufweist. Das Bewässerungsmodul 10 kann einen Tank zum Bevorraten von Wasser aufweisen, welcher an der Basisstation 13 befüllbar ist. Es ist aber auch möglich, dass das Bewässerungsmodul 10 mit einem Schlauch verbunden ist, um Wasser von einer Zapfstelle zu bekommen.

Mit der Bezugsziffer 11 ist ein Schnittmodul bezeichnet, welches Schneidwerkzeuge 11' aufweist, mit dem Pflanzen beschnitten werden können. So kann das Schneidwerkzeug 11', bspw. eine Schere oder ein Mähwerk sein. Es kann insbesondere eine Heckenschere oder Astschere sein, mit der Hecken, Bäume oder anderweitige Gewächse beschnitten werden können. Darüber hinaus sind Arbeitsmodule mit speziellen Werkzeugen zur Düngeraustragung, zum Laubrechen, zum Schneeräumen oder zur Bodenauflockerung vorgesehen.

Es können darüber hinaus auch Sensormodule 6 vorgesehen sein, die stationär im Gelände aufgestellt sind oder vom Arbeitsgerät 1 für den jeweiligen Aufgaben-Erfüllungseinsatz an einer geeigneten Stelle im Gelände positioniert werden. Das Sensormodul 6 kann aber auch selbstfahrend sein und selbsttätig zu einem Standort navigieren. Bspw. kann ein Arbeitsgerät 1 hierzu anstelle eines Arbeitsmodules 10, 11 ein Sensormodul tragen.

In einer Variante ist vorgesehen, dass das Sensormodul 9 ein fliegender Sensorroboter ist. Über eine GPS-Steuerung o. dgl. ist diese, eine oder mehrere Luftschrauben aufweisende Drohne in der Lage, vorbestimmte Positionen im Luftraum oberhalb des Geländes einzunehmen, um an verschiedenen Positionen Zustandsdaten zu erfassen.

Bei den Sensoren 5, 7 des Arbeitsgerätes 1 bzw. des Sensormoduls 6, 9 handelt es sich bevorzugt um bildgebende Sensoren, bspw. um eine Kamera, mit der zweidimensionale Bilder aufgenommen werden können. Aus diesen zweidimensionalen Bildern kann die Steuereinrichtung 12 oder die externe Recheneinrichtung 15 dreidimensionale Strukturdaten der Umgebung berechnen. Die Sensoren 5, 7 umfassen darüber hinaus Temperatursensoren zur Ermittlung der Bodentemperatur und/oder Lufttemperatur, Feuchtesensoren, zur Ermittlung der Bodenfeuchte und/oder der Luftfeuchte, UV-Sensoren oder Helligkeitssensoren. Es ist vorgesehen, dass das Arbeitsgerät 1 und/oder das Sensormodul 6, 9 zumindest einen, bevorzugt aber eine Mehrzahl dieser Sensoren aufweist.

Die Sensordaten, die von diesen Sensoren 5, 7 gewonnen werden, werden drahtlos mit Hilfe der Datenübertragungseinrichtung 14 optional an eine externe Recheneinrichtung 15 übertragen.

Gemäß einem Aspekt der Erfindung wird die externe Recheneinrichtung 15 in räumlicher Entfernung, insbesondere von einem externen Server, betrieben. Sie kann aber auch von einem lokalen Rechner ausgebildet sein. Die externe Recheneinrichtung 15 kann mit einer Mehrzahl von Arbeitsgeräten 1, die an unterschiedlichen Standorten betrieben werden, kommunizieren. Die externe Recheneinrichtung 15 ist darüber hinaus in der Lage, mit ein oder mehreren, an unterschiedlichen Standorten bereitgehaltenen Datenkommunikationsgeräten 17 zu kommunizieren, wobei es sich bei den Datenkommunikationsgeräten 17 um mobile Endgeräte, Personalcomputer oder Tabletrechner o. dgl. handeln kann. Über diese Datenkommunikationsgeräte 17 können eine Mehrzahl von Nutzern und insbesondere Mitglieder einer Nutzergruppe Erfahrungswerte und Daten über spezifische, zu pflegende Geländebereiche eingeben. Dabei können auch Kartografien übermittelt werden, wobei die Kartografien durch Erkundungsfahrten des Arbeitsgerätes 1 aufgenommen werden. Ferner können über die Datenkommunikationsgeräte 17 Angaben über die Positionen und die Art von bestimmten Pflanzen im jeweiligen Gelände eingegeben werden.

Die externe Recheneinrichtung 15 besitzt eine Datenbank 16, in der Pflegeinformationen für Pflanzen abgespeichert werden. Die Pflegeinformationen enthalten insbesondere pflanzenspezifische Pflegeangaben, bspw. Angaben über die Jahreszeiten, in denen optimal ein Rückschnitt der Pflanzen zu erfolgen hat, ob die Pflanzen Laub abwerfen, welche Bodenfeuchtigkeiten für die Pflanzen optimal sind, o. dgl. Die Pflegeinformationen enthalten somit insbesondere Bewässerungsinformationen, Schnittinformationen und Reinigungsinformationen. In der Datenbank 16 sind darüber hinaus ortsspezifische Daten abgelegt, die nutzerspezifisch sind und insbesondere die Kartografie des zu pflegenden Geländes enthalten. Die ortsspezifischen Daten können darüber hinaus die Standortdaten der Pflanzen, Angaben über vorhandene Arbeitsmodule 10, 11 umfassen, aktuelle Wetterinformationen und Pflanzenhöhen. Gesetzliche Vorgaben können ebenfalls in der Datenbank abgelegt sein.

Die aktuellen Wetterinformationen, Pflanzenhöhen, Bodenfeuchtigkeit und Luftfeuchtigkeit etc. werden aktuell von den Sensoren 5, 7 der Arbeitsgeräte 1 bzw. Sensormodule 6, 9 gewonnen. Diese Zustandsdaten 24 werden über die Datenübertragungseinrichtung 14 der externen Recheneinrichtung 15 zur Verfügung gestellt und dort abgespeichert.

Die Recheneinrichtung 15 ist in der Lage, aus den Pflegedaten, also den ortsspezifischen Daten 20 und den Pflegeinformationen 21, insbesondere unter Verwendung der aktuellen Zustandsdaten 24, Aufgabendaten 22 zu berechnen. Diese Aufgabendaten 22 beinhalten Aufgaben, die aktuell im Gelände durchzuführen sind, um Pflanzen zu pflegen. Bspw. können die Aufgabendaten 22 Angaben enthalten, an welcher Stelle eine Pflanzenbewässerung vorgenommen werden muss, oder welche Pflanze an welcher Position beschnitten werden muss. Ferner können die Aufgabendaten Angaben enthalten, ob eine Rasenfläche gemäht werden muss oder ob eine Fläche von Laub zu reinigen ist. Hierzu werden auch aus Höhen- und Volumendaten Wachstumshöhendaten berechnet.

Ebenso, wie die Zustandsdaten 24 mit den Sensoren des Arbeitsgerätes 1 oder der Sensormodule 6, 9 gewonnen werden, kann eine autarke Aufgabenerledigung im Gelände unter Verwendung dieser Sensoren 5, 7 erfolgen. Hierzu werden die Sensormodule 6, 9 in eine zur Erfassung der Strukturdaten optimale Position gebracht, bspw. um mit ihren Kameras ein 3D-Bild der zu pflegenden Pflanze zu erzeugen. Mit diesen Strukturdaten werden dann die Werkzeuge 10', 11' der Arbeitsmodule 10, 11 gesteuert.

Die externe Recheneinrichtung 15 kann darüber hinaus auch eine Wissensdatenbank enthalten, in die Nutzer ihre persönlichen Erfahrungen eintragen können bzw. mittels derer Nutzer Fragen an Mitglieder der Nutzergruppen stellen können. Die externe Recheneinrichtung 15 stellt somit eine Kommunikationsplattform ähnlich einer Social-Media-Plattform zur Verfügung, die als Treffpunkt für Anwender eines derartigen autonomen Outdoor-Gerätes dienen kann. Über diese Plattform und insbesondere dieser Plattform angeschlossenen Applikationen können Erfahrungswerte einzelner Anwender für die Gesamtheit aller Anwender aufbereitet werden und z.B. in Form von Tipps, Anwendungsvorschlägen oder -hilfen der Gemeinschaft zur Verfügung gestellt werden. Der Anwender kommuniziert mit dieser Kommunikationsplattform bspw. über ein Steuergerät, bspw. ein Steuergerät des autonomen Outdoor-Gerätes. Eine Kommunikation über ein mobiles Endgerät, einem Tablet-PC und insbesondere per Internetverbindung ist ebenfalls vorgesehen. Auch ist vorgesehen, dass das autonome Arbeitsgerät 1 oder eines der Sensormodule 6, 9 einen berührungsempfindlichen Bildschirm aufweist, über den mit der externen Recheneinrichtung 15 kommuniziert werden kann.

Die Wissensdatenbank kann auch verwendet werden, um abhängig von Tipps oder Erfahrungsdaten, die vom Nutzer in die Datenbank eingespeichert worden sind, Handlungsempfehlungen abzugeben, mit denen das Wachstum einzelner Pflanzen optimiert werden kann.

**Liste der Bezugszeichen**

| | | | |
|---|---|---|---|
| 1 | Arbeitsgerät | 24 | Zustandsdaten |
| 2 | Modulträger | 25 | Akkumulator |
| 3 | Fahrwerk | 26 | Kommunikationsschnittstelle |
| 4 | Kehrwerk | | |
| 5 | Sensor | | |
| 6 | Sensormodul | | |
| 7 | Sensor | | |
| 8 | Pflanze | | |
| 8' | Pflanze | | |
| 9 | Drohne | | |
| 10 | Arbeitsmodul | | |
| 10' | Werkzeug | | |
| 11 | Arbeitsmodul | | |
| 11' | Werkzeug | | |
| 12 | Steuereinrichtung | | |
| 13 | Basisstation | | |
| 14 | Datenübertragungseinrichtung | | |
| 15 | Recheneinrichtung | | |
| 16 | Datenbank | | |
| 17 | Datenkommunikationsgerät | | |
| 18 | Modulschnittstelle | | |
| 19 | Sende-/Empfangseinrichtung | | |
| 20 | Daten | | |
| 21 | Pflegeinformationen | | |
| 22 | Aufgabendaten | | |
| 23 | Schuppen | | |

## Patentansprüche

1. System, bestehend aus einem Fahrzeug (1) zur Gartenpflege, das selbsttätig im Außenbereich verfahrbar ist und ein von einer Steuereinrichtung (12) gesteuertes Fahrwerk (3) aufweist, wobei die Steuereinrichtung (12) von Sensoren (5) einer ersten Sensorik gewonnene Steuerdaten und eine aus den Steuerdaten erstellte und in einem Speicherelement gespeicherte Kartografie zur Navigation des Fahrzeugs (1) verwendet, wobei mit der ersten Sensorik körperliche Merkmale von Objekten der Umgebung erfassbar sind, **gekennzeichnet durch** eine einem Sensormodul (6, 9) zugeordnete, Sensoren (7) aufweisende zweite Sensorik, wobei die erste und die zweite Sensorik so ausgebildet sind, dass sie aus voneinander verschiedenen Perspektiven von demselben Objekt körperliche Merkmale erfassen, wobei die Sensoren (7) der zweiten Sensorik ausgebildet sind, um an einem Ort einer Pflanze (8) deren räumliche Ausdehnung zu erfassen, wobei das Fahrzeug (1) eine Recheneinrichtung aufweist, welche eingerichtet ist, die von den Sensoren (7) der zweiten Sensorik ermittelten Daten zu verwenden, um ein Volumenmodell der Pflanze (8) zu erfassen, wobei in der Kartografie gespeicherte zweidimensionale Ortskoordinaten der Pflanze (8) um Höhen- und/oder Volumendaten ergänzt werden, wobei die Recheneinrichtung eingerichtet ist, aus den Höhen- und/oder Volumendaten aktuelle Wuchshöhen-Daten der Pflanze (8) zu ermitteln, diese mit älteren Wuchshöhen-Daten zu vergleichen, um eine Volumenvergrößerung der Pflanze (8) zu ermitteln, und anhand einer Wissensdatenbank einer externen Recheneinrichtung (15) zu ermitteln, ob die Volumenvergrößerung einen Schnitt erforderlich macht und/oder Handlungsempfehlungen zur Pflege der Pflanze (8) zu erlangen, wobei die Wissensdatenbank eine Kommunikationsplattform zur Verfügung stellt, die als Treffpunkt für Anwender gleichartiger Fahrzeuge (1) dient und über welche Erfahrungswerte einzelner Anwender für eine Gesamtheit aller Anwender aufbereitet werden und in Form von Anwendungsvorschlägen oder -hilfen der Gemeinschaft zur Verfügung gestellt werden.

2. System nach Anspruch 1, **dadurch gekennzeichnet, dass** das zweite Sensormodul (6) selbstfahrend oder vom Fahrzeug (1, 9) verfahrbar ist.

3. System nach Anspruch 1 oder 2, **dadurch gekennzeichnet, dass** das Sensormodul (6) einem Luftfahrzeug (9) zugeordnet ist, das insbesondere GPS-gesteuert im Luftraum positionierbar ist.

4. System nach einem der vorhergehenden Ansprüche, **dadurch gekennzeichnet, dass** die Sensoren (5, 7) zumindest einen der folgenden Sensoren beinhalten: Einen bildgebenden Sensor, einen Sensor zur Ermittlung einer Bodentemperatur und/oder einer Lufttemperatur, einen Sensor zur Ermittlung der Luftfeuchte und/oder der Bodenfeuchte, einen Sensor zur Ermittlung von UV-Strahlen, einen Helligkeitssensor.

5. System nach einem der vorhergehenden Ansprüche, **gekennzeichnet durch** eine Datenübertragungseinrichtung (14) zur Kommunikation mit einer Basisstation (13), dem Fahrzeug (1) und/oder einer externen Recheneinrichtung (15).

6. System nach einem der vorhergehenden Ansprüche, **dadurch gekennzeichnet, dass** Mittel vorgesehen sind, mit denen von den Sensoren (5, 7) an verschiedenen Standorten aufgenommenen Abbildungen einer räumlichen Struktur ein dreidimensionales Modell der dreidimensionalen Struktur berechnet wird.

7. System nach einem der vorhergehenden Ansprüche, **dadurch gekennzeichnet, dass** das Fahrzeug (1) in einem Umgebungsdatenerfassungsmodus ein Sensormodul (6, 9) trägt und in einem Arbeitsmodus anstelle des Sensormoduls (6, 9) ein Arbeitsmodul (10, 11) mit modulspezifischen Werkzeugen (10', 11') trägt zur Pflanzenpflege.

8. System nach Anspruch 7, **dadurch gekennzeichnet, dass** das Werkzeug (10', 11') des Werkzeugmoduls (10, 11) mit von dem Sensormodul (6) gewonnenen Sensordaten bewegungsgesteuert wird.

9. Verfahren zum Betrieb eines Systems nach einem der vorhergehenden Ansprüche, wobei das Fahrzeug (1) Werkzeuge (10', 11') aufweist, wobei mit der ersten Sensorik und der zweiten Sensorik des Sensormoduls (6) aus voneinander verschiedenen Perspektiven körperliche Merkmale desselben Objektes, insbesondere körperliche Umgebungs-merkmale einer zu pflegenden Pflanze erfasst werden.

10. Verfahren nach Anspruch 9, **dadurch gekennzeichnet, dass** das Werkzeug (10', 11') unter Verwendung der von der ersten Sensorik und der zweiten Sensorik gewonnenen Sensordaten gesteuert wird.

## Claims

1. System consisting of a vehicle (1) for garden maintenance which can be moved automatically outdoors and has a chassis (3) controlled by a control device (12), the control device (12) using control data obtained from sensors (5) of a first sensor system and a cartography produced from the control data and stored in a memory element for navigation of the vehicle (1), wherein physical features of objects in the environment are detectable with the first sensor system, **characterized by** a second sensor system assigned to a sensor module (6, 9) and having sensors (7), the first and the second sensor systems being designed in such a way that they detect physical features of the same object from different perspectives, the sensors (7) of the second sensor system being designed in order to detect the spatial extent of a plant (8) at its, the vehicle (1) having a computing device which is set up to use the data determined by the sensors (7) of the second sensor system, in order to record a volume model of the plant (8), wherein two-dimensional location coordinates of the plant (8) stored in the cartography are supplemented by height and/or volume data, the computing device being set up to determine current growth height data of the plant (8) from the height and/or volume data, to compare these with older growth height data in order to determine an increase in volume of the plant (8), and to determine, on the basis of a knowledge database of an external computing device (15), whether the increase in volume of the plant (8) necessitates pruning and/or to obtain recommendations for action for the care of the plant (8), the knowledge database making available a communication platform which serves as a meeting place for users of similar vehicles (1) and via which experience values of individual users are processed for a totality of all users and are made available to the community in the form of application suggestions or aids.

2. System according to claim 1, **characterized in that** the second sensor module (6) is self-propelled or can be moved by the vehicle (1, 9).

3. System according to claim 1 or 2, **characterized in that** the sensor module (6) is associated with an aircraft (9) which can be positioned in the airspace, in particular under GPS control.

4. System according to one of the preceding claims, **characterized in that** the sensors (5, 7) include at least one of the following sensors: An imaging sensor, a sensor for determining a soil temperature and/or an air temperature, a sensor for determining air humidity and/ or soil moisture, a sensor for determining UV rays, a brightness sensor.

5. System according to one of the preceding claims, **characterized by** a data transmission device (14) for communication with a base station (13), the vehicle (1) and/ or an external computing device (15).

6. System according to one of the preceding claims, **characterized in that** means are provided with which a three-dimensional model of the three-dimensional structure is calculated from images of a spatial structure taken by the sensors (5, 7) at different locations.

7. System according to one of the preceding claims, **characterized in that** the vehicle (1) carries a sensor module (6, 9) in an environment data acquisition mode and carries a work module (10, 11) with module-specific tools (10', 11') for plant care instead of the sensor module (6, 9) in a work mode.

8. System according to claim 7, **characterized in that** the tool (10', 11') of the tool module (10, 11) is motion controlled with sensor data obtained from the sensor module (6).

9. Method for operating a system according to one of the preceding claims, wherein the vehicle (1) has tools (10', 11'), wherein physical features of the same object, in particular physical environmental features of a plant to be tended, are detected from different perspectives with the first sensor system and the second sensor system of the sensor module (6).

10. Method according to claim 9, **characterized in that** the tool (10', 11') is controlled by using the sensor data obtained from the first sensor system and the second sensor system.

## Revendications

1. Système constitué d'un véhicule (1) pour l'entretien de jardins, qui peut être déplacé automatiquement à l'extérieur et qui présente un châssis (3) commandé par un dispositif de commande (12), le dispositif de commande (12) utilisant des données de commande obtenues par des capteurs (5) d'un premier ensemble de capteurs et une cartographie établie à partir des données de commande et enregistrée dans un élément de mémoire pour la navigation du véhicule (1), le premier ensemble de capteurs permettant de détecter des caractéristiques physiques d'objets de l'environnement, **caractérisé par** un module de capteurs (6, 9) et présentant des capteurs (7), le premier et le deuxième ensembles de capteurs étant conçus de telle sorte qu'ils détectent des caractéristiques physiques du même objet à partir de perspectives différentes, les capteurs (7) du deuxième ensemble de capteurs étant conçus pour détecter l'étendue spatiale d'une plante (8) à un endroit donné, le véhicule (1) présentant un dispositif de calcul qui est conçu pour utiliser les données déterminées par les capteurs (7) du deuxième ensemble de capteurs, pour saisir un modèle volumétrique de la plante (8), des coordonnées de lieu bidimensionnelles de la plante (8) mémorisées dans la cartographie étant complétées par des données de hauteur et/ou de volume, le dispositif de calcul étant conçu pour déterminer des données de hauteur de croissance actuelles de la plante (8) à partir des données de hauteur et/ou de volume, pour les comparer à des données de hauteur de croissance plus anciennes afin de déterminer une augmentation de volume de la plante (8), et pour déterminer à l'aide d'une base de données de connaissances d'un dispositif de calcul externe (15), si l'augmentation de volume nécessite une taille et/ou d'obtenir des recommandations d'action pour l'entretien de la plante (8), la base de données de connaissances mettant à disposition une plate-forme de communication qui sert de point de rencontre pour les utilisateurs de véhicules (1) de même type et par laquelle les valeurs empiriques des différents utilisateurs sont préparées pour l'ensemble des utilisateurs et mises à disposition de la communauté sous forme de propositions ou d'aides d'utilisation.

2. Système selon la revendication 1, **caractérisé en ce que** le deuxième module de détection (6) est automoteur ou peut être déplacé par le véhicule (1, 9).

3. Système selon la revendication 1 ou 2, **caractérisé en ce que** le module de détection (6) est associé à un aéronef (9) qui peut être positionné dans l'espace aérien, notamment par commande GPS.

4. Système selon l'une des revendications précédentes, **caractérisé en ce que** les capteurs (5, 7) comprennent au moins un des capteurs suivants : un capteur d'imagerie, un capteur de température du sol et/ou de température de l'air, un capteur d'humidité de l'air et/ou du sol, un capteur de rayons UV, un capteur de luminosité.

5. Système selon l'une des revendications précédentes, **caractérisé par** un dispositif de transmission de données (14) pour la communication avec une station de base (13), le véhicule (1) et/ou un dispositif de recherche externe (15).

6. Système selon l'une des revendications précédentes, **caractérisé en ce que** des moyens sont prévus pour calculer un modèle tridimensionnel de la structure tridimensionnelle à partir d'images d'une structure spatiale prises par les capteurs (5, 7) à différents endroits.

7. Système selon l'une des revendications précédentes, **caractérisé en ce que** le véhicule (1) porte un module de capteurs (6, 9) dans un mode d'acquisition de données environnementales et porte un module de travail (10, 11) avec des outils (10', 11') spécifiques au module pour l'entretien des plantes à la place du module de capteurs (6, 9) dans un mode de travail.

8. Système selon la revendication 7, **caractérisé en ce que** l'outil (10', 11') du module d'outil (10, 11) est commandé en mouvement avec des données de capteur obtenues par le module de capteur (6).

9. Procédé d'exploitation d'un système selon l'une des revendications précédentes, le véhicule (1) présentant des outils (10', 11'), des caractéristiques physiques du même objet, en particulier des caractéristiques physiques de l'environnement d'une plante à entretenir, étant détectées à partir de perspectives différentes les unes des autres par le premier système de capteurs et le deuxième système de capteurs du module de capteurs (6).

10. Procédé selon la revendication 9, **caractérisé en ce que** l'outil (10', 11') est commandé en utilisant les données de capteur obtenues à partir du premier capteur et du deuxième capteur.
